# EUROPÄISCHE PATENTSCHRIFT

(11) **EP 1 764 000 B1**
(45) Veröffentlichungstag und Bekanntmachung des Hinweises auf die Patenterteilung: **30.04.2008**
(21) Anmeldenummer: 06017183.2
(22) Anmeldetag: 17.08.2006
(51) Int. Cl.: A22C 11/02, B65B 9/12, B65B 51/04

(54) **Rückhaltevorrichtung mit Kurbelgetriebe**
Support device with crankshaft-and-connecting-rod drive
Support avec dispositif d'entrainement à manivelle

(30) Priorität: 20.09.2005 DE 102005044879
(43) Veröffentlichungstag der Anmeldung: 21.03.2007
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- DE-A1- 3 206 675
- DE-B1- 2 645 714
- DE-C1- 10 131 807

## Beschreibung

Die Erfindung betrifft eine Rückhaltevorrichtung mit einem entlang eines Füllrohres beweglichen Halter für einen das Füllrohr umfänglich umschließenden Bremsring zum Ausüben einer Reibungskraft auf eine während eines Füllvorgangs von dem Füllrohr abzuziehende, schlauchförmige Verpackungshülle und mit einem mit dem Halter gekoppelten Antrieb zum Hin- und Herbewegen des Halters parallel zum Füllrohr.

Wird Füllgut, wie beispielweise Wurstbrät, Kitt oder Dichtmasse durch das Füllrohr, welches mit einer Füllmaschine in Verbindung steht, in die einseitig verschlossene, schlauchförmige Verpackungshülle eingebracht, dann bildet sich am Füllrohrausgang eine Wurst. Dabei wird die Verpackungshülle, welche zuvor von Hand oder automatisch auf das Füllrohr aufgezogen wurde oder welche in situ aus einer über dem Füllrohr zu einem Schlauch gefalteten und versiegelten Flachbandfolie gefertigt wurde, von dem Füllrohr durch den Fülldruck abgezogen.

Die eingangs beschriebene, hinlänglich bekannte Rückhaltevorrichtung ist während des Füllvorgangs benachbart ortsfest zu dem Füllrohr angeordnet und dergestalt ausgerichtet, dass sie als Halterung und Abstützung für einen das Füllrohr umfänglich umschließenden Bremsring (auch Darmbremse genannt) dient. Die Rückhaltevorrichtung weist demgemäß einen Halter (Darmbremshalter) auf, welcher in der Regel zur Aufnahme von Bremsringen mit verschiedenen Durchmessern geeignet ist, um eine Anpassung an unterschiedliche Füllrohrdurchmesser zu ermöglichen. Der Bremsring, welcher typischerweise eine ringförmige Gummilippe aufweist, ist elastisch gegen das Füllrohr vorgespannt und drückt den Darm dadurch gegen das Füllrohr an. Durch diesen Druck wird die Reibungskraft erzeugt, die dafür sorgt, dass der Darm während des Füllens kontrolliert von dem Füllrohr abgezogen wird und dass - je nach Vorspannung des Bremsrings - eine Wurst mit gewünschter Prallheit erzeugt wird.

Der Füllvorrichtung mit Füllrohr und der Rückhaltevorrichtung nachgeschaltet befindet sich eine Vorrichtung zum Abteilen von Portionspackungen, eine sog. "Clipmaschine", welche mittels Verdrängerelementen (kurz "Verdränger") die gefüllte Verpackungshülle radial einschnürt und dabei das im Einschnürbereich befindliche Füllgut verdrängt, um anschließend mittels Verschließwerkzeugen ein oder zwei Verschlusselemente (Clips) im Einschnürbereich (Schlauchzopf) auf die Verpackungshülle zu setzen und um diese herum zu verschließen. Wahlweise kann mittels eines Messers die Verpackungshülle zwischen den zwei Verschlusselementen durchtrennt werden, um einzelne Würste oder Wurststränge gewünschter Länge zu erzeugen. Bekannt sind zwei Arten von Abteil- und Verschließvorrichtungen: einerseits solche mit Spreizverdrängung, bei welchen die Verdrängerelemente nach dem Einschnüren axial im Bezug auf die Schlauchhülle auseinander gefahren werden, um den Einschnürbereich zum Setzen der Clips zu verlängern. Aus der DE 101 31 807 ist andererseits eine Abteil- und Verschließvorrichtung bekannt, bei welcher zu Gunsten einer einfacheren Kinematik auf eine verlängerte Schlauchzopfbildung verzichtet wird. Diese Art der Abteil- und Verschließvorrichtung kann aufgrund der einfacheren Kinematik mit einer wesentlich höheren Taktrate arbeiten.

Im Zusammenhang mit der Spreizverdrängung ist es bekannt, den Bremsring auf dem Füllrohr entgegen der Abzugsrichtung des Verpackungsschlauches während des Spreizens in eine Freigabestellung zurückzufahren. Dies ist notwendig, um ein ausreichendes Verpackungsvolumen freizugeben, in welches das beim Einschnüren und Spreizen der Verdrängerelemente verdrängte Füllgut ausweichen kann. Hierzu wird der Darmbremshalter bekanntermaßen mit einem pneumatischen Antrieb gekoppelt, welcher parallel zum Füllrohr wirkt und den Bremsring zusammen mit dem Halter auf dem Füllrohr zurückzieht, während die Verdränger den Schlauchzopf einschnüren und spreizen. Nach Beendigung des Abteil- und Verschließvorgangs, fährt mit dem nächsten Füllausstoß der intermittierend arbeiteten Füllvorrichtung der pneumatische Antrieb den Bremsring wieder nach vorne in einer der Mündung des Füllrohres nahen, vorderen Stellung und streift dabei das zuvor verdrängte Füllgut in den neu abgezogenen Verpackungsschlauch. Abteil- und Verschließvorrichtungen mit Spreizverdrängungen arbeiten dabei gewöhnlich mit einer Taktrate von 50 bis 100 Arbeitszyklen pro Minute.

Verschließvorrichtungen, wie die aus der DE 101 31 807 bekannte Portioniervorrichtung, sind jedoch in der Lage, die Produktionsgeschwindigkeit erheblich zu steigern. Bei Taktraten jenseits der 200 Zyklen pro Minute ist die Synchronität und ein ausreichender Hub der Hin- und Herbewegung des pneumatischen Linearantriebs nicht mehr gewährleistet, da das Arbeitsmedium (Luft oder sonstiges Fluid) trotz möglicherweise exakter Schaltzeiten der Ventile des pneumatischen Antriebs - jedenfalls bei gewöhnlicher Dimensionierung der Zuleitungen - nicht schnell genug strömt. Auch deshalb wird bei diesen Clipmaschinen auf eine verlängerte Schlauchzopfbildung durch Spreizverdrängung verzichtet, da dann nicht soviel Füllgut verdrängt wird und auch auf eine ausweichende Bewegung des Bremsrings verzichtet werden kann.

Hiervon ausgehend ist es Aufgabe der Erfindung, Voraussetzungen dafür zu schaffen, dass die Produktivität moderner Portioniervorrichtungen weiter gesteigert werden kann.

Die Aufgabe wird durch eine Rückhaltevorrichtung der eingangs genannten Art gelöst, deren Antrieb ein Kurbelgetriebe mit einer Kurbel aufweist, welche abtriebsseitig mit dem Halter verbunden ist.

Während für Spreizverdränger mit Taktraten bis 100 Zyklen pro Minute ein pneumatischer Antrieb für die Hin- und Herbewegung des Halters ausreichend war, ist ein Antrieb mit einem Kurbelgetriebe einem pneumatischen Linearantrieb insofern überlegen, als die erzeugte Hin- und Herbewegung mit der rotatorischen Antriebsbewegung zwangsgekoppelt ist und somit eine Synchronität mit dem Antriebsaggregat (bei jeder Geschwindigkeit) sicherstellt.

Insbesondere bei solchen Portioniervorrichtungen ohne Spreizverdrängung ist ein ausweichender Bremsring auch deshalb vorteilhaft, weil dann auf einen intermittierenden Füllvorgang zugunsten eines kontinuierlichen Füllvorgangs verzichtet werden kann. Eine kontinuierlich fördernde Pumpe ist bei gleicher Förderleistung erheblich kostengünstiger und weniger wartungsintensiv, da ein intermittierender Füllvorgang bei so hoher Taktrate auch sehr hohe Anforderungen an die Füllmaschine stellt, z.B. schnelle Anlaufgeschwindigkeit. Für das bei einer kontinuierlichen Füllung verdrängte und auch für das in der Zeit, in welcher die Verdränger und Verschließwerkzeuge die Verpackungshülle einschnüren, weiter geförderte Füllgut wird durch den ausweichenden Bremsring ein Ausweichvolumen geschaffen, so dass die Verpackungshülle keinen Schaden nimmt und beispielsweise platzt.

Gemäß einer vorteilhaften Weiterbildung weist die Rückhaltevorrichtung einen Anschlussflansch mit einem Wellenstumpf auf, der einerseits mit einem Antriebsmotor einer Verschließvorrichtung verbindbar und andererseits mit deren Antriebswelle gekoppelt ist. Auf diese konstruktiv einfache Weise durch Verwendung eines einzigen Antriebsmotors sowohl für die Verschließvorrichtung als auch für die Rückhaltevorrichtung und die durch das vorstehend beschriebene Kurbelgetriebe sichergestellte Zwangskopplung, sind die Hin- und Herbewegungen der Rückhaltevorrichtung und die Hubbewegung der Verdrängerelemente und der Verschließwerkzeuge der Verschließvorrichtung immer zueinander synchron.

Um trotz der mechanischen Kopplung einen Schaden von der Rückhaltevorrichtung oder anderen Antriebs- oder Maschinenteilen abzuwenden, weist der Antrieb der Rückhaltevorrichtung bevorzugt eine Sicherheitskupplung auf. Damit wird sichergestellt, dass beispielsweise bei einer Blockade der Hin- und Herbewegung des Halters ein kontinuierlich wirkendes Antriebsaggregat keine Beschädigung an der Rückhaltevorrichtung oder anderen Maschinenelement verursacht.

Um ferner einen variablen Haltepunkt für die Hin- und Herbewegung des Halters und somit einen variablen Hub des Bremsrings zu ermöglichen, weist die Rückhaltevorrichtung vorzugsweise einen Arbeitsspeicher und in Kraftflussrichtung dahinter eine Hemmung auf. Dies ermöglicht, dass das Antriebsaggregat im kontinuierlichen Betrieb arbeiten und das Kurbelgetriebe weiter antreiben kann, während die Hemmung den Halter abtriebsseitig in dem gewünschten Haltepunkt festhält und die Antriebsenergie in dem Arbeitsspeicher deponiert wird. Dies dient dazu, den Halter zusammen mit dem Bremsring in der zurückgefahrenen Freigabestellung zu halten, bis die Verdrängerelemente und Verschließwerkzeuge nach dem Verschließen den Weg - abhängig vom Kaliber der hergestellten Wurst - ganz oder teilweise wieder freigegeben haben.

Die Hemmung ist vorzugsweise ausgebildet, an der Kurbel oder an einem mit der Kurbel verbundenen Abtriebswelle anzugreifen. Der Arbeitsspeicher umfasst gemäß einer bevorzugten Weiterbildung ein die Abtriebswelle mit einer Antriebswelle koppelndes, drehmomentbelastbares Federelement. Bei dieser Konstruktion findet die Abkopplung der Antriebs- und der Abtriebsbewegung im Bereich des Wellenstranges statt und für die Übertragung der Kreisbewegung der Kurbel auf die Linearbewegung des Halters kann ein einfacher und mechanisch hoch belastbarer Pleuel gewählt werden.

Die Sicherheitskupplung weist bevorzugt eine die Antriebswelle mit dem Federelement verbindende Kupplungsscheibe auf, wobei das Federelement bevorzugt als eine die Kupplungsscheibe axial gegen die Antriebswelle andrückende Schraubendruckfeder ausgebildet ist. Auf diese Weise kann die einerseits als Arbeitsspeicher dienende Feder zugleich auch als Andruckmittel für die Sicherheitskupplung dienen. Dies verringert die Anzahl bewegter Bauteile.

Vorteilhaft weist die Antriebswelle ein Mitnahmeelement auf, das mit einem korrespondierenden Mitnahmeelement der Kupplungsscheibe in Eingriff steht, wobei der Eingriff bei einer bestimmten relativen Winkelstellung zwischen Antriebswelle und Abtriebswelle aufhebbar ist. Beispielsweise gegenüber einer Rutschkupplung hat dies den Vorteil, dass die Antriebswelle mit der Abtriebswelle mittels Federelement und Kupplungsscheibe immer in einer durch die Anordnung der korrespondierenden Mitnahmeelemente definierten Winkellage miteinander in Eingriff stehen. Auf diese Weise bleibt die Synchronität bzw. Phasenlage zwischen dem Antriebsaggregat der Rückhaltevorrichtung und der Hin- und Herbewegung des Halters erhalten, auch nachdem die Sicherheitskupplung zum Einsatz kam.

Alternativ zu einem mechanisch gekoppelten Antriebsmotor einer Verschließvorrichtung weist die Rückhaltevorrichtung einen mit der Antriebswelle gekoppelten (eigenen) Antriebsmotor und eine elektronische Steuerung mit einem Steuereingang auf, welcher mit einer Steuerschnittstelle der Verschlussvorrichtung koppelbar ist.

Weitere Merkmale und Vorteile der erfindungsgemäßen Rückhaltevorrichtung finden sich in den Unteransprüchen. Diese werden unter Bezugnahme auf die beigefügten Figuren in der nachfolgenden Beschreibung anhand von Ausführungsbeispielen erläutert. Es zeigen:
- Fig. 1: eine schematisch vereinfachte, perspektivische Darstellung eines Ausführungsbeispiels der erfindungsgemäßen Rückhaltevorrichtung;
- Fig. 2: eine Schnittdarstellung eines anderen Ausführungsbeispiels der erfindungsgemäßen Rückhaltevorrichtung;
- Fig. 3: eine Draufsicht auf die Rückhaltevorrichtung gem. Fig. 2 in einer ersten Winkelstellung der Kurbel;
- Fig. 4: eine Draufsicht der Rückhaltevorrichtung gem. Fig. 2 in einer zweiten, um 90° fortgeschrittenen Winkelstellung der Kurbel;
- Fig. 5: eine Draufsicht auf die Rückhaltevorrichtung gem. Fig. 2 in einer Freifahrstellung; und
- Fig. 6: eine schematisch vereinfachte, perspektivische Illustration der Wirkungsweise der Sicherheitskupplung der erfindungsgemäßen Rückhaltevorrichtung.

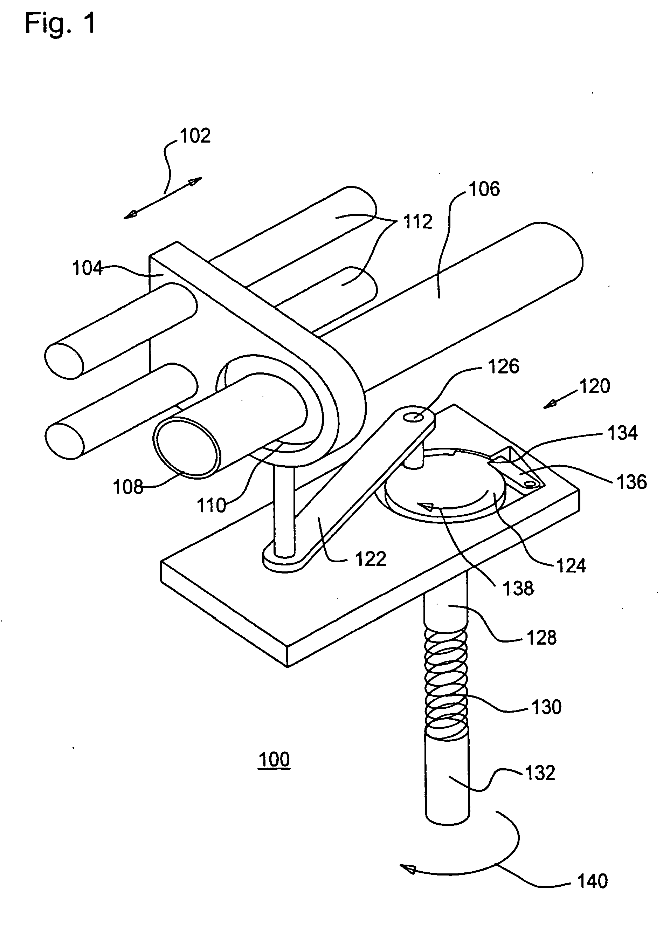

Die Rückhaltevorrichtung 100 gem. Fig. 1 weist einen entlang der durch einen Doppelpfeil 102 gekennzeichneten Richtung hin und her beweglichen Halter 104 auf. Die Richtung 102 dieser Linearbewegung fällt zusammen mit der Ausrichtung eines gestrichelt dargestellten Füllrohres 106, welches einer Füllmaschine (nicht dargestellt) zum Fördern eines Füllgutes zugeordnet ist. Das Füllgut wird in Richtung einer vorderen Öffnung 108 des Füllrohrs 106 gefördert. Eine nicht dargestellte, auf das Füllrohr 106 aufgezogene Verpackungshülle, welche an ihrem vorderen Ende durch einen Clip verschlossen ist, wird durch den so entstehenden Fülldruck von dem Füllrohr 106 abgezogen. Das Füllrohr 106 umfänglich umschließend ist in dem Halter 104 ein Bremsring 110 angeordnet. Dieser weist in seinem Inneren wenigstens einen elastischen Andruckring auf, welcher die Verpackungshülle gegen das Füllrohr 106 andrückt und auf diese Weise eine Reibungskraft beim Abziehen der Verpackungshülle verursacht.

Der Halter 104 wird zur Ausführung der Linearbewegung an einer (oder mehreren) parallel zu dem Füllrohr 106 ausgerichteten Schiene 112 geführt. Der Antrieb für die Hin- und Herbewegung des Halters 104 weist erfindungsgemäß ein Kurbelgetriebe 120 auf, welches abtriebsseitig mit dem Halter 104 mittels eines Pleuels 122 verbunden ist. Das Kurbelgetriebe umfasst eine Kurbelscheibe 124 mit einem Kurbelzapfen 126, an dem der Pleuel 122 angelenkt ist. Die Kurbelscheibe 124 ist mit einer Abtriebswelle 128 verbunden. Diese wiederum wird mittels einer Schraubendruckfeder 130 - hier schematisch vereinfacht dargestellt - von einer Antriebswelle 132 angetrieben.

Die Kurbelscheibe 124 weist umfänglich einen Vorsprung 134 auf, der zusammen mit einer elastisch vorgespannten Klinke 136 als Drehhemmung dient. Wird die Kurbelscheibe 124 in Richtung des Pfeils 138 in die dargestellte Position gedreht, so hindert die Klinke 136 die Kurbelscheibe 124 an einer Weiterdrehung. Wird dann die Antriebswelle 132 weiter in der durch den Pfeil 140 gekennzeichneten Antriebsrichtung gedreht, so spannt dies die Feder 130, welche als Arbeitsspeicher in den Kraftfluss von der Antriebswelle 132 zum Bremsringhalter 104 eingeschaltet ist. Auf diese Weise kann die Kurbelscheibe 124 und somit über den Pleuel 122 auch der Bremsringhalter 104 mit Bremsring 110 in einem gewünschten Haltepunkt angehalten werden, während die Antriebswelle von einem Antriebsmotor weiter gedreht werden kann.

Nachfolgend wird das von der Rückhaltevorrichtung gem. Fig. 1 ausgeführte Verfahren im Zusammenhang mit dem Wurstproduktionsvorgang geschildert. Zunächst wird die einseitig am Ende axial verschlossene Verpackungshülle durch das Füllrohr 106 mit Füllgut gefüllt und dabei von einem auf dem Füllrohr befindlichen Vorrat gegen die von dem das Füllrohr umfänglich umschließenden Bremsring 110 ausgeübte Reibungskraft abgezogen. Danach wird der Bremsring 110 zusammen mit dem Bremsringhalter 104, angetrieben durch das Kurbelgetriebe 120, auf dem Füllrohr 106 entgegen der Abzugsrichtung in eine Freigabestellung zum Freigeben eines Verpackungsvolumens zurückgefahren. Während zumindest teilweise zeitlich überlappend der Bremsringhalter 104 mit dem Bremsring 110 in der Freigabestellung mittels der Drehhemmung der Klinke 136 angehalten werden, wird die gefüllte Verpackungshülle mittels nicht dargestellter Verdrängerelemente eingeschnürt und das in dem Einschnürbereich befindliche Füllgut dabei in das freigegebene Verpackungsvolumen verdrängt. Im Einschnürbereich werden ein oder zwei nicht dargestellte Verschlusselemente auf die Verpackungshülle gesetzt und um diese herum mittels nicht dargestellter gegeneinander wirkender Verschließwerkzeuge (Stempel und Matrize) verschlossen. Gegebenenfalls wird die Verpackungshülle zwischen den beiden Verschlusselemente danach durchtrennt. In einem nächsten Arbeitstakt werden die Verschließwerkzeuge und Verdrängerelemente wieder auseinander gefahren und geben wieder einen größeren Querschnitt zum erneuten Befüllen der nachfolgenden Verpackung frei. Während dessen wird auch die Drehhemmung durch das Lösen der Klinke 136 und das Freigeben des Vorsprungs 134 der Kurbelscheibe 124 aufgehoben und dadurch der Halters 104 in die vordere Stellung gefahren. Wie dies im Einzelnen geschieht und in welcher Weise dies mit dem Verdrängen und Verschließen synchronisiert werden kann, wird anhand der nachfolgenden Figuren genauer beschrieben. Das Freigeben der Kurbelscheibe 124 bewirkt, dass die in der Schraubendruckfeder 130 gespeicherte Arbeit die Abtriebswelle 128 mit der Kurbelscheibe 124 beschleunigt antreibt, bis diese der zwischenzeitlich weiter gedrehten Winkelstellung der Antriebswelle 132 nachgefolgt ist.

Die Haltedauer (also der Zeitpunkt der Freigabe) hängt u. a. vom Kaliber der hergestellten Wurst ab und wird nach Erfahrung eingestellt. Es ist dabei darauf zu achten dass der Bremsring 110 nicht zu früh, also noch im verschlossenen Zustand oder während des Öffnens der Verdrängerelemente, in die vordere Stellung fährt. Ansonsten droht die Gefahr, dass die Verpackungshülle platzt, weil das in dem Freigabevolumen befindliche Füllgut gegen die (teilweise) verschlossenen Verdrängerelemente gedrückt wird.

Der Haltepunkt hingegen, d.h. die Position an der sich die Klinke befindet oder an der Kurbelscheibe angreift ist so gewählt, dass das Freigabevolumen dem beim Abteilen und Verschließen verdrängten und ggf. bei kontinuierlicher Befüllung weiterbefüllen Volumen des Füllguts möglichst exakt entspricht, um eine möglichst hohe Gewichtsgenauigkeit der Portionen (Würste) zu erzielen.

Anstelle der Schraubendruckfeder 130 zwischen der Antriebswelle 132 und der Abtriebswelle 128 kann der Arbeitsspeicher prinzipiell auch an jeder anderen Stelle in den Kraftfluss von der Antriebswelle zu dem Bremsringhalter 104 angeordnet sein. Dies kann beispielsweise im Bereich des Pleuels 122 geschehen. Entscheidend ist dabei, dass in Kraftflussrichtung dahinter die Hemmung der Hin- und Herbewegung des Halters 104 erfolgt, in diesem Beispiel müsste demnach der Halter 104 unmittelbar, beispielsweise im Bereich der Schiene 112 an einem bestimmten Haltepunkt angehalten werden.

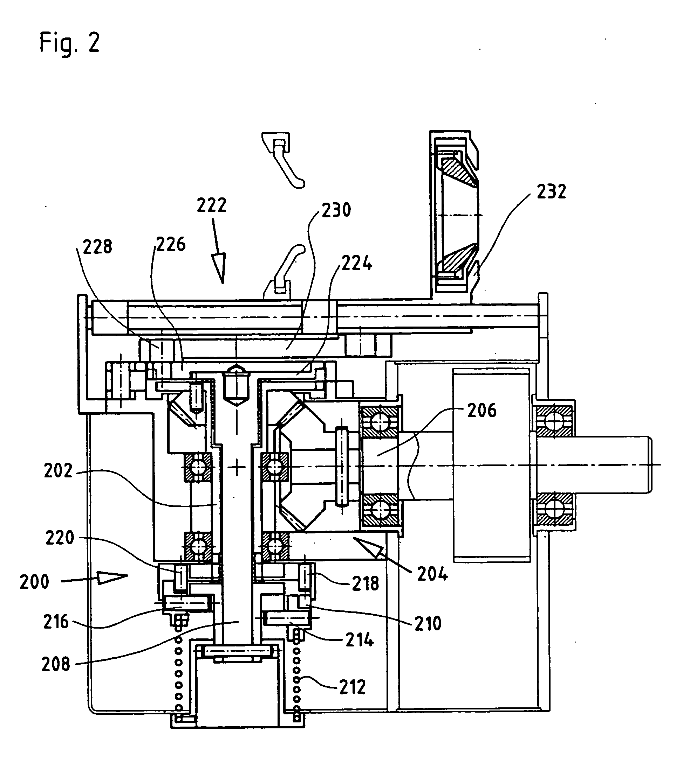

In Fig. 2 ist eine mögliche Ausführungsform des erfindungsgemäßen Kurbelgetriebes 200 dargestellt. Dieses weist eine als Hohlwelle ausgestaltete Antriebswelle 202 auf. Ein Kegelgetriebe 204 verbindet die Antriebswelle 202 mit einer Eingangswelle 206, deren freier Wellenstumpf zum Verbinden mit dem Antriebsmotor einer Verschließvorrichtung nach außen geführt wird. Im Inneren der hohlen Antriebswelle 202 ist die Abtriebswelle 208 gelagert. Ein Kraftschluss von der Antriebswelle 202 zur Abtriebswelle 208 erfolgt zunächst über einen Kupplungsring 210 und eine sich daran anschließende Schraubendruckfeder 212.

Zunächst sei die Funktion des Kupplungsrings 210 außer Acht gelassen und angenommen, dass dieser stets von der Antriebswelle 202 mitgenommen wird. In diesem Fall ergibt sich eine Übertragung der Drehbewegung wie in dem in Fig. 1 dargestellten Beispiel. Die Antriebswelle überträgt die Drehbewegung mittels Kupplungsring 210 auf die Schraubenfeder 212, welche die Antriebswelle 208 in Drehrichtung nachzieht. Vorzugsweise ist die Schraubendruckfeder 212 gegen die Antriebsrichtung vorgespannt, so dass bei nicht erhöhtem abtriebsseitigen Drehmomentbedarf die Drehung der Abtriebswelle der Drehung der Antriebswelle 202 ohne Verzögerung oder Phasenversatz erfolgt.

Wird die Antriebswelle 208 unmittelbar oder im Bereich der Kurbel durch eine Hemmung angehalten, so wird die Feder 212 durch eine kontinuierliche Weiterdrehung der Antriebswelle 202 weitergespannt. Wird dann die Abtriebswelle 202 bzw. die Kurbel wieder freigegeben, so wird die in der Feder 212 gespeicherte Arbeit freigegeben und die Abtriebswelle 208 folgt wieder der Drehbewegung der Antriebswelle 202.

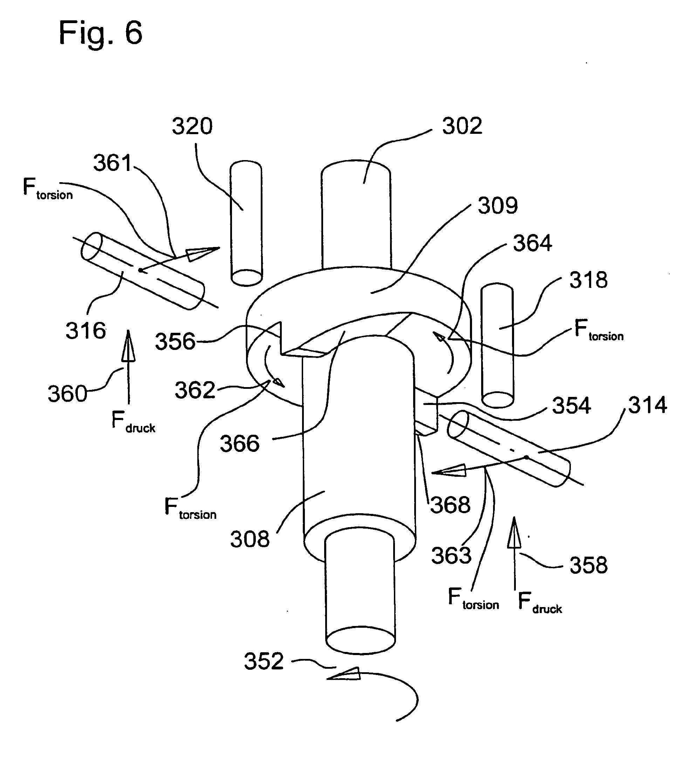

Die Kupplungsscheibe hat mehrere Funktionen. Zum einen ist sie über die Feder 212 und zum anderen mittels zweier Mitnahmeelemente 214, 216 in Form von Stiften und zweier korrespondierender Anlageflächen an der Abtriebswelle mit letzterer gekoppelt. Der so gebildete Anschlag ermöglicht die zuvor erwähnte Vorspannung der Feder 212. Auf diese Weise wird eine feste Winkelstellung zwischen Antriebswelle und Abtriebswelle definiert, in welcher die Abtriebswelle nach Freigabe der Hemmung immer wieder zurückfährt. Dies wird im Einzelnen noch unter Bezugnahme auf Fig. 6 ausführlicher erläutert.

Zum anderen sind die Kupplungsscheibe 210 und die Antriebswelle 202 mittels zweier Mitnahmeelemente 218, 220 an der Antriebswelle 202 und korrespondierender Mitnahmeelemente in Form von Bohrungen an der Kupplungsscheibe 210 gekoppelt. Im normalen Betriebszustand wird die Kupplungsscheibe mit der Antriebswelle mitgedreht. Der Eingriff der Mitnahmeelemente 218, 220 in die korrespondierenden Mitnahmeelemente der Kupplungsscheibe 210 wird jedoch bei einer bestimmten relativen Winkelstellung zwischen Antriebswelle und Abtriebswelle aufgehoben. Dies geschieht in einem Überlastfall, wenn die Kupplungsscheibe axial gegen eine Druckkraft, welche ebenfalls von der Schraubendruckfeder 212 ausgeübt wird, nach unten abgehoben wird, wie illustrativ auf der rechten Hälfte der Schnittdarstellung gezeigt ist. Nähere Einzelheiten zu diesem Mechanismus werden ebenfalls unter Bezugnahme auf Fig. 6 erläutert. Auf diese Weise wird das Federelement, nämlich die Schraubendruckfeder 212, einerseits als Arbeitsspeicher mittels ihrer Torsionsfederwirkung verwendet und andererseits als Andrücker der im Übrigen von der Kupplungsscheibe gebildeten Sicherheitskupplung mittels ihrer Druckfederwirkung verwendet.

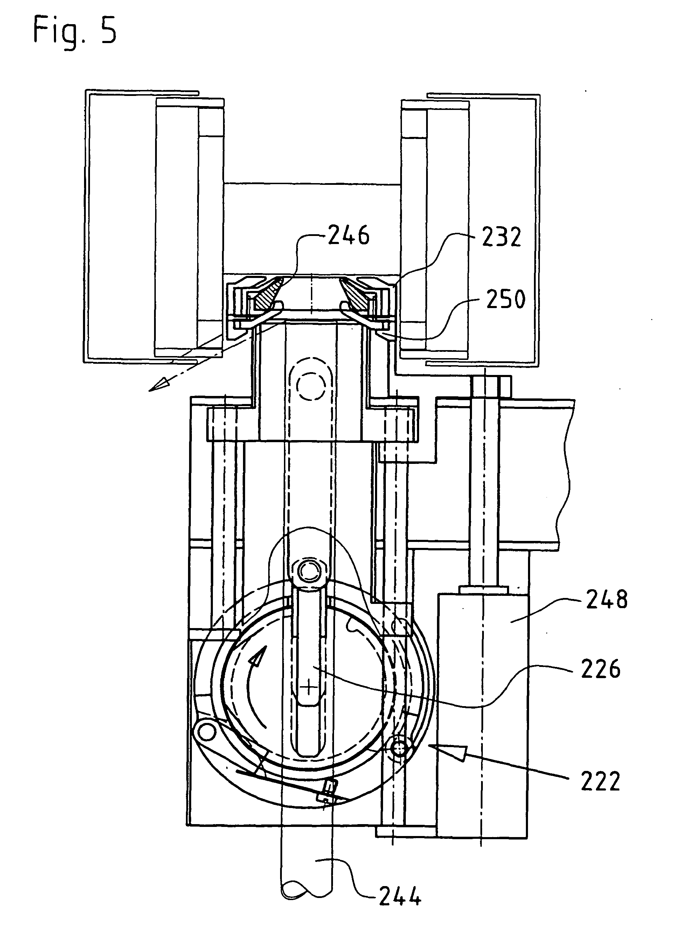

Im oberen Bereich ist die Abtriebswelle 208 mit einer Kurbel 222 verbunden. Die Kurbel 222 ist zweigeteilt und besteht aus einer Kurbelscheibe 224 mit einer Schlittenführung und einem den Kurbelzapfen 228 tragenden Schlitten 226. Der Schlitten 226 und der Kurbelzapfen 228 drehen sich zusammen mit der Kurbelscheibe 224 und somit fest gekoppelt mit der Abtriebswelle 208. Die lineare Schlittenführung bewirkt, dass der Kurbelzapfen zusätzlich zu der Drehbewegung in einer dafür vorgesehenen Winkelstellung eine Linearbewegung ausführen kann, um den Halter und somit mit den darin aufgenommenen Bremsring in eine freie Fahrstellung vor dem Füllrohr fahren kann, um das Füllrohr zum Bestücken mit einer neuen Verpackungshülle freizugeben. Näheres hierzu wird unter Bezugnahme auf Fig. 5 erläutert. An den Kurbelzapfen 228 ist der Pleuel 230 angelenkt, welcher wiederum mit seinem dem Kurbelzapfen 228 fernen Ende an dem linear geführten Bremsringhalter 232 gelenkig verbunden ist.

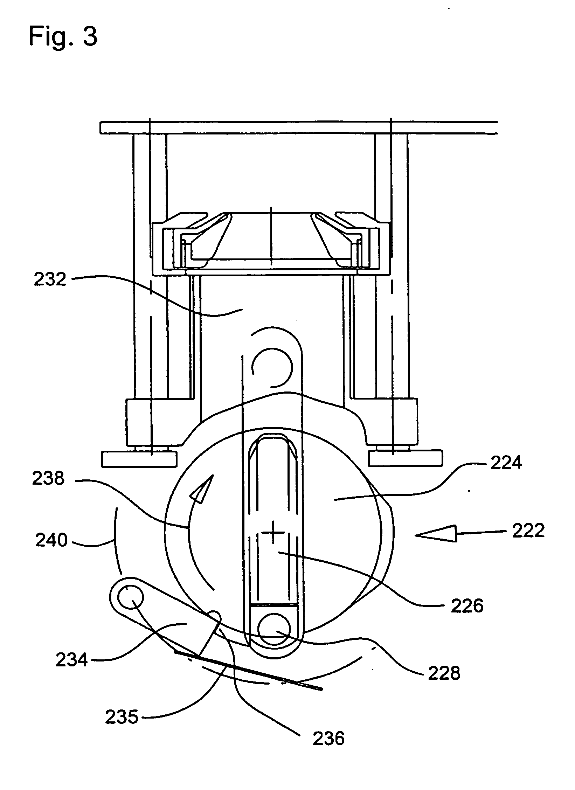

In Fig. 3 ist eine Draufsicht der Ausführungsform der erfindungsgemäßen Rückhaltevorrichtung gem. Fig. 2 gezeigt. Die Kurbel 222 befindet sich demgemäß in einer Winkelstellung, in welcher die Linearführung des Schlittens 226 parallel zur Führungs- und Bewegungsrichtung des Bremsringhalters 232 ausgerichtet und der Kurbelzapfen 228 und somit der Bremsringhalter in einer hinteren, dem Füllrohrende (nicht dargestellt) fernen Stellung angeordnet sind. In dieser Stellung greift die Klinke 234 an dem Absatz 236 in der Kurbel 222 an und hindert diese an einer Weiterdrehung in die durch den Pfeil 238 gekennzeichnete Antriebsrichtung. Die Klinke ist mittels einer Feder 235 federnd vorgespannt und rastet so automatisch in die Sperrstellung ein. Die Klinke ist ferner in nicht näher dargestellter Weise wenigstens auf einen Kreisabschnitt 240 in ihrer Winkelstellung relativ zur Kurbel 222 verstellbar, so dass die Winkelstellung der Kurbel im Haltepunkt verändert werden kann. Damit ist es möglich, den Bremsringhalter 232 innerhalb eines dem Kreisabschnitts 240 entsprechenden Hubbereich an einem beliebigen Haltepunkt anzuhalten, während das Verdrängen und Verschließen der Verpackungshülle vonstatten geht. Der Haltepunkt wird dabei so ermittelt, dass der wirksame Hub auf ein dem verdrängten Volumen entsprechenden Wert eingestellt wird, um eine möglichst genauere Reproduzierbarkeit jedes einzelnen Füllvorgangs zu erzielen und auf diese Weise die Gewichtsgenauigkeit der abgefüllten und verschlossenen Portionspackungen zu erhöhen.

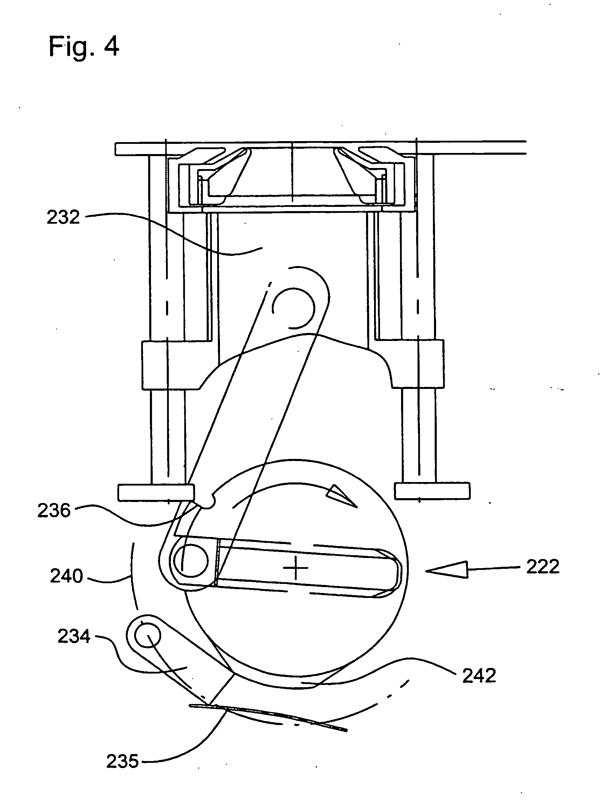

In Fig. 4 ist die Draufsicht auf die Rückhaltevorrichtung mit einer anderen Stellung der Kurbel 222 gezeigt. In dieser Stellung befindet sich die Anordnung kurz nach dem Zeitpunkt, in welchem das Angreifen der Klinke 234 am Absatz 236 mittels einer Kurvenscheibe 242, welche mit der sich permanent weiterdrehenden Antriebswelle 202 (in Fig. 4 nicht zu erkennen) verbunden ist, aufgehoben und die Kurbel 222 zur Drehung freigegeben wurde (Auslösezeitpunkt). Auf diese Weise kommunizieren die Hemmung (Klinke 234) und die Antriebswelle 202 mittels einer Kurvensteuerung (Kurvenscheibe 242). Durch die kontinuierliche Weiterdrehung der Antriebswelle 202 wurde die Spannung der Feder 212 zwischenzeitlich weiter erhöht. Nach dem Freigeben der Kurbel ist die Abtriebswelle 208 mit Kurbel 222 aufgrund der gespeicherten Arbeit der Antriebswelle 202 bis in die dargestellte Winkelstellung gefolgt.

Der dargestellten Winkelstellung der Kurbel 222 entsprechend befindet sich der Bremsringhalter 232 auf halbem Weg in die dem Füllrohrende nahe vordere Stellung. Der Phasenversatz zwischen dem Haltepunkt und dem Auslösepunkt ist durch die relative Winkellage zwischen dem Vorsprung 236 und dem Punkt der Kurvenscheibe 240 bestimmt, welche die Klinke außer Eingriff mit dem Vorsprung 236 bringt. Im vorliegenden Ausführungsbeispiel beträgt die Phasendifferenz etwa 90°.

Fig. 5 zeigt dasselbe Ausführungsbeispiel wiederum in einer anderen Winkelstellung, in welcher der Bremsringhalter 232 in seiner vorderen, dem Füllrohrende nahen Stellung angelangt ist. In dieser Darstellung ist das Füllrohr gestrichelt mit der Nummer 244 dargestellt. Die Stellung der Fig. 5 zeigt keine Betriebsstellung, sondern eine Wartungsstellung, in welcher der Schlitten 226 der Kurbel 222 nach vorne ausgezogen ist. Auf diese Weise wird der Bremsringhalter 232 mit dem darin befindlichen Bremsring 246 aus der, in Abzugsrichtung, vorderen Stellung der Hin- und Herbewegung weiter in Abzugsrichtung in eine Freifahrstellung von dem Füllrohr abgestreift, so dass das Füllrohr 244 zum Bestücken mit einem neuen Vorrat an Verpackungsschlauch aus der dargestellten Arbeitsposition abgeschwenkt werden kann. Zu diesem Zweck ist der Halter 232 mit einem Linearantrieb 248 in Form einer pneumatischen Zylinderkolbenanordnung gekoppelt. Diese bewegt unmittelbar einen dem Bremsring 246 vorgeschalteten Rückhaltering 250, der als Rückhaltemittel zum Zurückhalten eines auf dem Füllrohr befindlichen Vorrats an Verpackungsschlauch dient. Schlägt dieser Rückhaltering durch Betätigen des Linearantriebs unmittelbar oder mittelbar an dem Bremsringhalter 232 an, werden beide zusammen weiter in die dargestellte Freifahrstellung gefahren. Umgekehrt verläuft es beim Zurückziehen. Zunächst wird der Rückhaltering 250 zurückgefahren, bis dessen Halterung an einem korrespondierenden Teil der Bremsringhalterung 232 anschlägt, und diese zusammen mit dem Rückhaltering 250 in die vordere Stellung auf dem Führer 244 zurückbewegt.

Fig. 6 zeigt eine schematisch vereinfachte Explosionsdarstellung eines Ausführungsbeispiels der Sicherheitskupplung für den Antrieb der Rückhaltevorrichtung.

Diese ist auf die für die Aufhebung der Kopplung zwischen Antriebswelle und Abtriebswelle wesentlichen Bauelemente reduziert. Zum einen sind dies ein Abschnitt der Antriebswelle 302 und paarweise gegenüberliegend angeordnete Mitnahmeelemente 318, 320, welche in nicht näher dargestellter Weise mit der Antriebswelle 202 verbunden sind. Diese drehen sich mit der Antriebswelle 202 in die durch den Pfeil 352 gekennzeichnete Richtung. Es sind ferner ein Abschnitt der Abtriebswelle 308 und eine mit der Abtriebswelle 308 verbundene Kurvenscheibe 309. Nicht im Detail dargestellt ist die Kupplungsscheibe 210 sowie das Federelement bzw. die Schraubendruckfeder 212, welche die Antriebswelle 302 - oder genauer die Kupplungsscheibe 210 - mit der Abtriebswelle 308 koppeln. Zur Vereinfachung sind anstelle der Kupplungsscheibe lediglich paarweise gegenüberliegend angeordnete Mitnahmeelemente 314, 316 in gesprengter Darstellung gezeigt, welche einerseits mit Mitnahmeelementen in Form von Absätzen 354, 356 in der Kurve der Scheibe 309 korrespondieren und andererseits zugleich mit den Mitnahmeelementen 318, 320, welche mit der Antriebswelle verbunden sind.

Das nicht dargestellte Federelement bewirkt in Kombination eine durch die Pfeile 358, 360 angedeutete lineare Druckkraft F_{druck} auf die Kupplungsscheibe bzw. die Mitnahmeelemente 314, 316 in Richtung auf die Scheibe 309 der Abtriebswelle 308. Andererseits übt sie eine durch die Pfeile 362, 364 angedeutete Torsionskraft Fₜₒᵣₛᵢₒₙ auf die Abtriebswelle 308 und somit auch die Scheibe 309 aus, welche die Absätze 354, 356 gegen die Mitnahmeelemente 314, 316 vorspannt. Deshalb greift die Torsionskraft an diesen mit umgekehrter Richtung 361, 363 an. Wird nun die Antriebswelle 302 und somit die Mitnahmeelemente 318, 320 in Pfeilrichtung 352 angetrieben, nehmen diese die Kupplungsscheibe, d. h. die Mitnahmeelemente 314, 316 in Drehrichtung mit. Die Abtriebswelle 308 folgt aufgrund der Torsionskraft Fₜₒᵣₛᵢₒₙ 362, 364 dieser Drehung, so dass die Absätze 354, 356 stets an den Mitnahmeelementen 314, 316 anliegen. Wird nun die Drehung der Kurbel und somit die Drehung der Abtriebswelle 308 blockiert, bleibt die Kurvenscheibe 309 stehen, während sich die Antriebswelle und damit sämtliche Mitnahmeelemente 314, 316, 318, 320 weiter drehen. Dabei überstreichen die Mitnahmeelemente 314, 316, der Kupplungsscheibe die dreidimensionalen Kurven 366, 368 auf der Kurvenscheibe 309 (eigentlich Kurventrommel), welche Kurven sich in dieser Darstellung nach unten aus der Ebene der Kurvenscheibe 309 erhöhen. Dadurch werden die Mitnahmeelemente 314, 316 zusammen mit der Kupplungsscheibe ebenfalls nach unten geführt, bis eine Winkelstellung erreicht ist, in der die Mitnahmeelemente 318, 320 der Antriebswelle 302 nicht mehr in Eingriff mit den korrespondierenden Mitnahmeelementen 314, 316 der Kupplungsscheibe sind, so dass diese zur Drehung freigegeben wird. Dies bewirkt wiederum, dass die Mitnahmeelemente 314, 316 der Kupplungsscheibe aufgrund der Torsionskraft Fₜₒᵣₛᵢₒₙ 361, 363 zurück in die Eingriffsposition mit den Absätzen 354, 356 schnappen. Dieser Vorgang kann ohne Beschädigung des Getriebes wiederholt werden, bis die Kurbel und somit die Abtriebswelle 308 wieder zur Drehung freigegeben ist.

Bei jedem Einzelnen der zuvor beschriebenen Ausklinkvorgänge der Sicherheitskupplung verdrehen sich die Relativlage zwischen Antriebswelle und Abtriebswelle aufgrund der zweizähligen Symmetrie um 180° zueinander. Damit wäre die Synchronität zwischen Antrieb und Hin- und Herbewegung des Bremsringhalters verletzt. Um dies zu vermeiden, ist es zweckmäßig, die Mitnahme zwischen den Mitnahmeelementen 318 und 314 einerseits sowie 316 und 320 andererseits so zu gestalten, dass diese nur bei einer vollen 360° Drehung erfolgt. Dies kann, wie in Fig. 2 zu erkennen ist, durch unterschiedliche Radien der Mitnahmeelemente 218, 220 und der korrespondierenden Bohrungen in der Kupplungsscheibe 210 gelöst werden.

Selbstverständlich ist die Sicherheitskupplung nicht auf die in Fig. 6 dargestellte Ausführungsform beschränkt. Die Sicherheitskupplung kann auch an jeder anderen Stelle in dem Antriebsstrang eingebaut sein, und andere Ausgestaltung, wie beispielsweise die einer Rutschkupplung annehmen. Die dargestellte Ausführungsform hingegen verbindet die Sicherheitskupplung auf vorteilhafte Weise mit dem Arbeitsspeicher in Form einer Schraubendruckfeder, welcher sowohl eine Drehmomentbelastbarkeit als auch eine Druckbelastbarkeit innewohnt.

Andererseits kann unter Verzicht auf diese Vorteile und dennoch im Rahmen der Erfindung abweichend von der Ausführungsform gem. Fig. 1 anstelle der Schraubendruckfeder 130 auch jedwedes andere drehmomentbelastbare Federelement, wie beispielsweise eine Spiralfeder an dieser Stelle vorgesehen sein.

Alternativ zu der gezeigten Ausführungsform kann der Pleuel 122 auch durch einen fest mit dem Bremsringhalter 104 verbundenen Element angreifen, in dem der Kurbelzapfen 126 in einen quer zur Führungsrichtung ausgerichteten Schlitz eingreift, welcher die Bewegung vertikal zur Hin- und Herbewegung des Bremsrings 110 kompensiert. Diese Ausgestaltung hat jedoch den Nachteil höherer Geräuschbildung und eines höheren Verschleißes aufgrund der größeren Bewegungsfreiheit der zu einander beweglichen Elemente, nämlich des Kurbelzapfens 126 und des ortsfest zu dem Halter 104 vorgesehenen Verbindungselementes.

## Patentansprüche

1. Rückhaltevorrichtung (100)
mit einem entlang eines Füllrohres (106, 244) beweglichen Halter (104, 232) für einen das Füllrohr (106, 244) umfänglich umschließenden Bremsring (110, 246) zum Ausüben einer Reibungskraft auf eine während eines Füllvorgangs von dem Füllrohr (106, 244) abzuziehende, schlauchförmige Verpackungshülle und
mit einem mit dem Halter (104, 232) gekoppelten Antrieb zum Hin- und Herbewegen des Halters (104, 232) parallel zum Füllrohr (106, 244),
**dadurch gekennzeichnet, dass** der Antrieb ein Kurbelgetriebe (120, 200) mit einer Kurbel (222) aufweist, welche abtriebsseitig mit dem Halter (106, 244) verbunden ist.

2. Vorrichtung nach Anspruch 1,
**dadurch gekennzeichnet, dass** die Rückhaltevorrichtung (100) einen Arbeitsspeicher und in Kraftflussrichtung dahinter eine Hemmung aufweist, um den Halter (106, 244) in einem Haltepunkt anzuhalten.

3. Vorrichtung nach Anspruch 2,
**dadurch gekennzeichnet, dass** der Arbeitsspeicher ein die Abtriebswelle (128, 208, 308) mit einer Antriebswelle (132, 202, 302) koppelndes, drehmomentbelastbares Federelement umfasst.

4. Vorrichtung nach Anspruch 3,
**dadurch gekennzeichnet, dass** die Hemmung und die Antriebwelle (132, 202, 302) mittels eine Kurvensteuerung kommunizieren, welche ausgebildet ist, das Angreifen der Hemmung an der Kurbel (222) oder der Abtriebswelle (128, 208, 308) aufzuheben.

5. Vorrichtung nach einem der vorstehenden Ansprüche,
**dadurch gekennzeichnet, dass** der Antrieb eine Sicherheitskupplung aufweist.

6. Vorrichtung nach einem der vorstehenden Ansprüche,
**gekennzeichnet durch** einen mit dem Halter (104, 232) gekoppelten Linearantrieb (248), der ausgebildet ist, den Halter (104, 232) aus einer in Abzugsrichtung vorderen Stellung der Hin- und Herbewegung weiter in Abzugsrichtung in eine Freifahrstellung, in der ein in den Halter (104, 232) eingesetzter Bremsring (110, 246) von dem Füllrohr (106, 244) abgezogen ist, und zurück in die vorderen Stellung anzutreiben.

7. Vorrichtung nach einem der vorstehenden Ansprüche,
**gekennzeichnet durch** ein stromaufwärts des Halters (104, 232) angeordnetes Rückhaltemittel (250) zum Zurückhalten eines auf dem Füllrohr (106, 244) befindlichen Vorrats an Verpackungshülle.

8. Vorrichtung nach einem der vorstehenden Ansprüche,
**dadurch gekennzeichnet, dass** die Kurbel (222) mittels eines Pleuels (122, 230) mit dem Halter (104, 232) verbunden ist.

9. Vorrichtung nach einem der vorstehenden Ansprüche,
**dadurch gekennzeichnet, dass** das die Rückhaltevorrichtung (100) einen Anschlussflansch mit einem Wellenstumpf aufweist, der einerseits mit dem Antriebsmotor einer Verschließvorrichtung verbindbar und andererseits mit der Antriebswelle (132, 202, 302) gekoppelt ist.

10. Vorrichtung nach einem der Ansprüche 1 bis 8,
**dadurch gekennzeichnet, dass** die Rückhaltevorrichtung (100) einen mit der Antriebswelle (132, 202, 302) gekoppelten Antriebsmotor und eine elektronische Steuerung mit einem Steuereingang aufweist, der mit einer Steuerschnittstelle einer Verschließvorrichtung koppelbar ist.

## Claims

1. A retaining apparatus (100) comprising
a holder (104, 232) movable along a filling tube (106, 244) for a braking ring (110, 246) peripherally enclosing the filling tube (106, 244) for exerting a frictional force on a tubular packaging casing which is to be pulled off the filling tube (106, 244) during a filling operation, and
a drive coupled to the holder (104, 232) for reciprocating movement of the holder (104, 232) parallel to the filling tube (106, 244),
**characterised in that** the drive has a crank transmission (120, 200) having a crank (222) which is connected at the drive output side to the holder (104, 232).

2. Apparatus according to claim 1 **characterised in that** the retaining apparatus (100) has a work storage means and downstream thereof in the force transmission direction a retarding means in order to stop the holder (104, 232) at a holding point.

3. Apparatus according to claim 2 **characterised in that** the work storage means includes a torque-loadable spring element which couples the drive output shaft (128, 208, 308) to a drive shaft (132, 202, 302).

4. Apparatus according to claim 3 **characterised in that** the retarding means and the drive shaft (132, 202, 302) communicate by means of a cam control which is adapted to terminate the engagement of the retarding means with the crank (222) or the drive output shaft (128, 208, 308).

5. Apparatus according to one of the preceding claims **characterised in that** the drive has a safety clutch.

6. Apparatus according to one of the preceding claims **characterised by** a linear drive (248) which is coupled to the holder (104, 232) and which is adapted to drive the holder (104, 232) from a position in the reciprocating movement which is a forward position in the pull-off direction further in the pull-off direction into a free-travel position in which a braking ring (110, 246) fitted into the holder (104, 232) is pulled off the filling tube (106, 244), and back into the forward position.

7. Apparatus according to one of the preceding claims **characterised by** a retaining means (250) arranged upstream of the holder (104, 232) for restraining a supply of packaging casing disposed on the filling tube (106, 244).

8. Apparatus according to one of the preceding claims **characterised in that** the crank (222) is connected to the holder (104, 232) by means of a connecting rod (122, 230).

9. Apparatus according to one of the preceding claims **characterised in that** the retaining apparatus (100) has a connecting flange with a stub shaft which on the one hand can be connected to the drive motor of a closure device and which on the other hand is coupled to the drive shaft (132, 202, 302).

10. Apparatus according to one of claims 1 to 8 **characterised in that** the retaining apparatus (100) has a drive motor coupled to the drive shaft (132, 202, 302) and an electronic control with a control input which can be coupled to a control interface of a closure device.

## Revendications

1. Dispositif de retenue (100)
comprenant
un support (104, 232) mobile le long d'un tube d'embossage (106, 244) pour une bague de freinage (110, 246) entourant le tuyau d'embossage (106, 244) de façon périphérique pour l'exercice d'une force de frottement sur une enveloppe d'emballage en forme de boudin, à retirer pendant une opération d'embossage du tuyau d'embossage (106, 244) et
un entraînement couplé au support (104, 232) pour le déplacement d'un côté et de l'autre du support (104, 232) parallèlement au tuyau d'embossage (106, 244),
**caractérisé en ce que** l'entraînement a un mécanisme à manivelle (120, 200) ayant une manivelle (222) qui est reliée côté sortie au support (106, 244).

2. Dispositif selon la revendication 1,
**caractérisé en ce que** le dispositif de retenue (100) a un accumulateur de travail et, dans le sens du flux de force, en aval derrière un dispositif inhibiteur pour arrêter le support (106, 244) en un point de retenue.

3. Dispositif selon la revendication 2,
**caractérisé en ce que** l'accumulateur de travail comprend un élément à ressort couplant l'arbre de sortie (128, 208, 308) à un arbre d'entraînement (132, 202, 302) et pouvant être sollicité par un couple.

4. Dispositif selon la revendication 3,
**caractérisé en ce que** le dispositif inhibiteur et l'arbre d'entraînement (132, 202, 302) communiquent au moyen d'une commande à came, qui est conçue pour supprimer l'application de l'inhibition sur la manivelle (222) ou sur l'arbre de sortie (128, 208, 308).

5. Dispositif selon l'une quelconque des revendications précédentes,
**caractérisé en ce que** l'entraînement a un accouplement de sécurité.

6. Dispositif selon l'une quelconque des revendications précédentes,
**caractérisé par** un entraînement linéaire (248) couplé au support (104, 232), qui est conçu pour entraîner le support (104, 232) d'une position, avant dans le sens d'extraction, du mouvement aller et retour, plus loin dans le sens d'extraction, à une position de liberté de déplacement, dans laquelle une bague de freinage (110, 246) insérée dans le support (104, 232) est enlevée du tuyau d'embossage (106, 244), et retour dans la position avant.

7. Dispositif selon l'une quelconque des revendications précédentes,
**caractérisé par** un moyen de retenue (250) disposé en aval du support (104, 232) pour la retenue d'une réserve d'enveloppe d'emballage se trouvant sur le tuyau d'embossage (106, 244).

8. Dispositif selon l'une quelconque des revendications précédentes,
**caractérisé en ce que** la manivelle (222) est reliée au support (104, 232) au moyen d'une bielle (122, 230).

9. Dispositif selon l'une quelconque des revendications précédentes,
**caractérisé en ce que** le dispositif de retenue (100) a une bride de raccordement ayant un bout d'arbre, qui peut être relié d'une part au moteur d'entraînement d'un dispositif de fermeture et qui est couplé d'autre part à l'arbre d'entraînement (132, 202, 302).

10. Dispositif selon l'une quelconque des revendications 1 à 8,
**caractérisé en ce que** le dispositif de retenue (100) a un moteur d'entraînement couplé à l'arbre d'entraînement (132, 202, 302) et une commande électronique ayant une entrée de commande, qui peut être couplée à une interface de commande d'un dispositif de fermeture.
